(19)

Europäisches
Patentamt
European
Patent Office
Office européen
des brevets

(11) **EP 3 847 846 B1**

(12) **EUROPEAN PATENT SPECIFICATION**

(45) Date of publication and mention
of the grant of the patent:
**29.01.2025 Bulletin 2025/05**

(21) Application number: **19857332.1**

(22) Date of filing: **03.09.2019**

(51) International Patent Classification (IPC):
*H04W 72/1268* (2023.01)   *H04L 1/1607* (2023.01)
*H04L 1/1867* (2023.01)   *H04L 5/00* (2006.01)

(52) Cooperative Patent Classification (CPC):
**H04W 72/1268;** H04L 1/1671; H04L 1/1887;
H04L 5/0094; H04W 72/23

(86) International application number:
**PCT/CA2019/051228**

(87) International publication number:
**WO 2020/047655 (12.03.2020 Gazette 2020/11)**

(54) **METHODS AND APPARATUSES FOR SMALL DATA TRANSMISSIONS**

VERFAHREN UND VORRICHTUNGEN FÜR KLEINE DATENÜBERTRAGUNGEN

PROCÉDÉS ET APPAREILS POUR DES TRANSMISSIONS DE PETITES DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **07.09.2018   US 201862728571 P**

(43) Date of publication of application:
**14.07.2021   Bulletin 2021/28**

(73) Proprietor: **Sierra Wireless, ULC
Halifax, Nova Scotia, B3J 0J2 (CA)**

(72) Inventors:
• **VOS, Gustav Gerald
Tsawwassen, British Columbia V4L 1S8 (CA)**
• **DOST, Recep Serkan
Coquitlam, British Columbia V3J 5A5 (CA)**
• **BENNETT, Steven John
Coquitlam, British Columbia V3K 2S8 (CA)**

(74) Representative: **Botti & Ferrari S.p.A.
Via Cappellini, 11
20124 Milano (IT)**

(56) References cited:
**US-A1- 2018 123 765     US-A1- 2018 123 765
US-A1- 2018 139 774**

• **NOKIA ET AL: "Transmission in preconfigured
UL resources", vol. RAN WG1, no. Gothenburg,
Sweden; 20180820 - 20180824, 10 August 2018
(2018-08-10), XP051515813, Retrieved from the
Internet <URL:http://www.3gpp.org/ftp/tsg%
5Fran/WG1%5FRL1/TSGR1%5F94/Docs/R1%
2D1808431%2Ezip> [retrieved on 20180810]**
• **SIERRA WIRELESS: "DL Data after PUR
transmission", vol. RAN WG2, no. Athens,
Greece; 20190225 - 20190301, 14 February 2019
(2019-02-14), XP051603081, Retrieved from the
Internet <URL:http://www.3gpp.org/ftp/tsg%
5Fran/WG2%5FRL2/TSGR2%5F105/Docs/R2%
2D1901731%2Ezip> [retrieved on 20190214]**

Description

## FIELD OF THE INVENTION

The present invention pertains to the field of telecommunications and in particular to methods and apparatuses for data transmission.

## BACKGROUND

In a modern telecommunication network, if a user equipment (UE) is in an idle or inactive state and the network needs to send the UE a data packet, the UE would be paged, which triggers the transition of the UE to the connected mode using a random-access procedure. At the end of the random-access procedure, the UE would be in the connected mode, allowing the UE to send and receive data for as long as is required. As is known, the random-access procedure requires significant signaling overhead and thus it may be desired to avoid the use thereof.

To overcome this issue, the 3rd Generation Partnership Project (3GPP) has been putting efforts forward for small uplink (UL) data optimizations. For example, in Release 15, early data transmission (EDT) was specified for Long Term Evolution for Machines (LTE-M) and narrowband-Internet of things (NB-loT) as an optimized small UL packet method. However, EDT uses UL grants (e.g. random access response (RAR)). In the Release 16, for LTE-M and new radio (NR) 3GPP standards groups are studying the optimization of the infrequent UL packets via grant-less methods with pre-configured resources. In LTE-M, the preconfigured UL resources are using standard LTE orthogonal multiple access (OMA) with time and frequency allocations. In NR, non-orthogonal multiple access (NOMA) waveforms are additionally being studied that would allow for more than one UE to send data in the same physical time/frequency resource. LTE-M and NR are considering both dedicated and shared resources.

In addition, as is known, DL control information (DCI) is sent on the DL control channel (i.e. machine type communication physical downlink control channel (MPDCCH) for LTE-M and narrowband physical downlink control channel (NPDCCH) for NB-IOT) and the DCI is used for many things including resource grants and acknowledgements/negative acknowledgements (ACKs/NACKs). There is a cyclic redundancy check (CRC) on the DCI which is used for error detection but the CRC can also used as an ID (i.e. the RNTI (Radio Network Temporary Identifier)). In LTE, LTE-M, and NB-IOT, the CRC is scrambled by RNTI so that the CRC only passes when the correct data and the correct RNTI is used so the RNTI does not require any bits in the data section of the DCI.

Although the 3GPP has been studying and specifying some new small uplink data transmissions, no optimization work has been done for downlink (DL) data transactions thus there is no efficient method to send DL data even with the implementation of new optimized UL data transmissions available. As such, for example, when there are DL data packets for transmission to the UE after the UL data is sent, for example using EDT, the UE will still need to use inefficient methods (e.g. un-optimized legacy random-access procedures) for the UE to receive the DL data, which may result in even more overhead when compared with the legacy random-access procedure being used from the beginning.

Furthermore, there are many cases when DL data is needed after UL data. For example, many user applications sending UL data packets usually expect a DL application acknowledgement (ACK). Also, depending on the radio link control (RLC) mode, a DL RLC acknowledgement may be needed after UL data receipt. In some cases, the UL data packet may trigger several DL data transmissions and additional UL data transmissions (e.g. the UE may send additional UL data once it enters into a connected mode).

In addition, the current UL small data optimization technologies do not solve a problem when the physical layer identifier (ID) (e.g. radio network temporary identifier (RNTI)) of the DL control channel (e.g. Physical Downlink Control Channel (PDCCH)) that carries the DL control information (DCI) is limited in size thus limiting the number of unique IDs, e.g. a PDCCH ID of 16 bits has only $2^{16}$ unique IDs.

In certain cases, this may not be an issue because this type of ID is typically only used when UEs are in connected mode and there are a limited number of UEs in connected mode. However, when one considers that there may be millions of UEs in idle mode which may require the sending of small data transmissions, a much larger range of numeric addresses could be required.

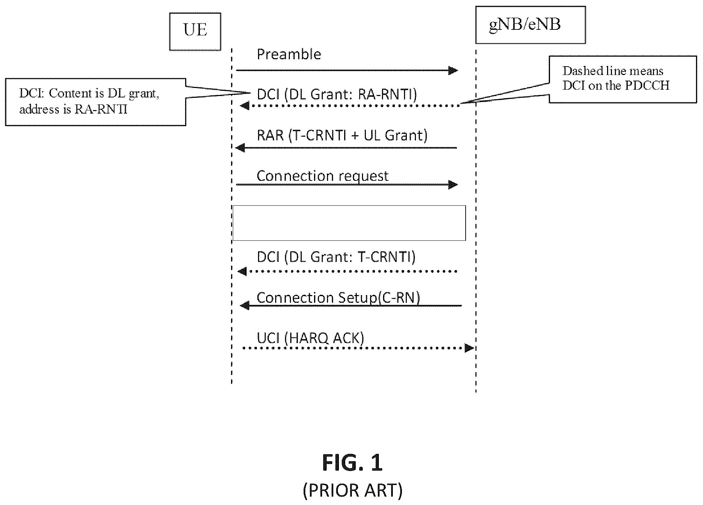

To resolve this issue, as shown in FIG. 1, the UL Grant or RAR normally assigns a temporary ID (e.g. temporary Cell Radio Network Temporary Identifier (T-CRNTI)), where the grant (i.e. the RAR/msg2) assigns the temporary ID which can be used by the DCI. However, this assignment is not possible in a grant free process, given that a temporary ID cannot be assigned as there is no RAR or grant.

Furthermore, simply increasing the size of the ID for the control channel would likely be not feasible due to objections from peers that would result from such a significant change to the 3GPP specification. In addition, the increased ID size would result in a loss of spectral efficiency.

In addition, if a UE is assigned a dedicated preconfigured UL resource (PUR) but has no data to send, ideally, the UE would NOT have to send dummy data as this action can waste battery life (i.e. legacy semi-persistent scheduling (SPS) does require dummy data to be sent). An issue arises if the UE can optionally send data or not send data. In such a case, the evolved Node (eNB) then needs a reliable mechanism to distinguish the difference between data transmission and no data transmission, as the eNB actions in each case can be very different. For example, if the UE sent data but there are errors in the data, then the eNB should send a NACK with a grant for more resources to retransmit this data. However, if the UE did not send any data, then the eNB should do nothing as no more resources are required. However, if the eNB makes a mistake, then network resources are wasted. There exists a problem in this regard, given that in low SNR (e.g. <-10dB SNR), the noise power is higher than the signal power, and as such it can be very difficult for the eNB to make this detection of data transmission or no data transmission.

UEs performing a grant-fee uplink transmission are also known from US Publication No. US 2018/123765 to Cao et al. and from the article to Nokia et al.: "Transmission in preconfigured UL resources", 3GPP Draft; R1-1808431_Trans_in_Preconfig_UL_Resources, 3rd Generation Partnership Project (3GPP), Mobile Competence Centre; 650, Route des Lucioles; F-06921 Sophia-Antipolis Cedex; France.

Unfortunately, despite the problems discussed above, most solutions or proposals have been concentrating on applications that only send uplink data packets without any application layer acknowledgments or just require the full access procedure to enter the connected mode. Therefore, there is a need for a method and apparatus for efficient small data transmission that is not subject to one or more limitations of the prior art.

This background information is provided to reveal information believed by the applicant to be of possible relevance to the present invention. No admission is necessarily intended, nor should be construed, that any of the preceding information constitutes prior art against the present invention.

## SUMMARY OF THE INVENTION

An object of the present invention is to provide methods and apparatuses for small data transmissions. In accordance with an aspect of the present invention, there is provided a method for small data transmission between a user equipment (UE) and a network node. The method includes transmitting, by the UE, uplink data to the network node, receiving, by the UE, first downlink control information (DCI), wherein the first DCI includes an acknowledgement of the uplink data transmission and a DCI identifier (ID). The method further includes receiving, by the UE, a second DCI wherein the second DCI includes a downlink grant and the DCI ID and receiving, by the UE, downlink data..

In some embodiments, the DCI ID is a preconfigured radio network temporary identifier (PC-RNTI). In some embodiments, the uplink data transmission is grant free. In some embodiments, the PC-RNTI is assigned to the UE for one or more of dedicated time, frequency and signature resource. In some embodiments, the UE shares the PC-RNTI with other UEs.

In some embodiments, the method further includes upon receipt of the acknowledgement, changing, by the UE, to connected mode.

In accordance with another aspect of the present invention, there is provided a user equipment (UE) for small data transmission. The UE includes a network interface for receiving and transmitting data, a processor and a non-transient memory for storing instructions. The instructions when executed by the processor cause the UE to transmit uplink data to the network node, the UE indicating an expectation of the downlink data on a physical downlink shared channel during configuration of uplink resources, and receive first downlink control information (DCI), wherein the first DCI includes an acknowledgement of the uplink data transmission and an DCI identifier (ID).

In some embodiments, the DCI ID is a preconfigured radio network temporary identifier (PC-RNTI). In some embodiments, the uplink data transmission is grant free. In some embodiments, the PC-RNTI is assigned to the UE for one or more of dedicated time, frequency and signature resource. In some embodiments, the UE shares the PC-RNTI with other UEs.

The instructions when executed by the processor further cause the UE to receive a second DCI wherein the second DCI includes a downlink grant and the DCI ID and receive downlink data. In some embodiments the instructions when executed by the processor further cause the UE to, upon receipt of the acknowledgement, change to connected mode.

In accordance with another aspect of the present invention, there is provided a network node for small data transmission. The network node includes a network interface for receiving and transmitting data, a processor and a non-transient memory for storing instructions. The instructions, when executed by the processor cause the network node to receive from a user equipment, UE, an expectation of downlink data during configuration of a preconfigured uplink resource, PUR, receive uplink data from the UE and transmit first downlink control information (DCI), wherein the first DCI includes an acknowledgement of the uplink data transmission and a DCI identifier (ID). The instructions, when executed by the processor further configure the network node to transmit a second DCI wherein the second DCI includes a downlink grant and the DCI ID and transmit downlink data.

In some embodiments, the DCI ID is a preconfigured radio network temporary identifier (PC-RNTI).

## BRIEF DESCRIPTION OF THE FIGURES

Further features and advantages of the present invention will become apparent from the following detailed description, taken in combination with the appended drawings, in which:

FIG. 1 is a flow diagram that illustrates temporary ID assignment in accordance with the prior art.
FIG. 2A illustrates an overall flow of the signaling between a UE and a base station for the transition to connected mode upon receipt of UL data, in accordance with embodiments of the present invention.
FIG. 2B illustrates an overall flow of the signaling between a UE and a base station for grant free UL data transmissions with retransmission, in accordance with embodiments of the present invention.
FIG. 3 illustrates H-SFN ranges and associated PC-RNTI assignments in accordance with embodiments of the present invention.
FIG. 4 illustrates an overall flow of the signaling between a UE and a base station for collision resolution for the shared PC-RNTI method according to embodiments of the present invention.
FIG. 5 illustrates an overall flow of the signaling between a UE and a base station showing potential transmission collision timing between two UEs, in accordance with embodiments of the present invention.
FIG. 6 illustrates an overall flow of the signaling between a UE and a base station for changing PC-RNTI to C-RNTI, in accordance with embodiments of the present invention.
FIG. 7 illustrates an overall flow of the signaling between a UE and a base station for changing PC-RNTI to C-RNTI, in accordance with embodiments of the present invention.
FIG. 8 is a schematic diagram of a hardware device, accordance with embodiments of the present invention.

It will be noted that throughout the appended drawings, like features are identified by like reference numerals.

## DETAILED DESCRIPTION OF THE INVENTION

The present invention provides methods and apparatuses for small data transmissions in telecommunication networks. Specifically, there is provided effective and substantially optimized methods and apparatuses for sending DL data after UL data transmissions such that the entire small data transmission process is substantially optimized when used with small UL data transmission optimization techniques.

According to embodiments, if a UE expects DL data or more UL data to be sent after a UL data transmission in the PUR, the UE can request a base station, such as an evolved NodeB (eNB), a next generation NodeB (gNB) or other base station or network node configuration, to place the UE directly into 'connected mode' immediately after receipt of the acknowledgement (ACK) for the UL data transmission in the PUR. Consequently, DL data and any further UL data can be transmitted to the UE and from the UE, respectively, without the resource overhead which would be required for the random-access process and a state transition to the 'connected mode'.

According to embodiments, the base station (e.g. eNB, gNB or other base station or network node configuration) can assign a new 'preconfigured-RNTI' (PC-RNTI) during the initial PUR configuration, especially when the UL data transmission is a grant free process. The assignment of the PC-RNTI can resolve the problem due to the limited size (e.g. 16 bits) of the physical layer ID of the DL control channel (e.g. physical downlink control channel (PDCCH)) that carries the DL control information (DCI) which is limited in size.

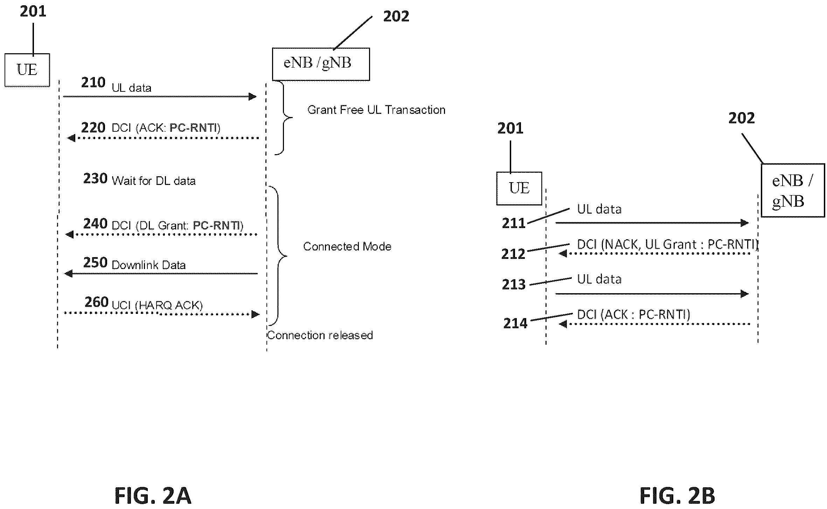

FIG. 2A illustrates an overall flow of the signaling between a UE and a base station for the transition to connected mode upon receipt of UL data, in accordance with embodiments of the present invention. FIG. 2B illustrates an overall flow of the signaling between a UE and a base station for grant free UL data transmissions with retransmission, in accordance with embodiments of the present invention.

According to embodiments, the UE that will receive DL data packets would indicate that it is expecting DL data packets after UL data transmission is completed. It would be readily understood that the opposite is possible, wherein the UE can indicate that it is not expecting DL data packets after UL data transmission is completed. The UE indicate that it is expecting DL data packets during the configuration of the pre-configured UL resources (e.g. radio resource control (RRC) configuration) for the grant free UL data transmission that it is to be directly put into the connected mode. Because of this indication, the UE can directly move into the connected mode, substantially immediately, after receiving the UL acknowledgement. In this manner the UE is configured to receive the DL data packets from the network node, such as a base station, eNB or gNB. In addition, the UE is further able to transmit UL packets as it is in the connected mode. In some embodiments, the UE may optionally indicate an expected duration for receiving the DL data transmission. By indicating the expected duration for receiving the DL transmission, the network, for example the base station, can release the configured network resources without transmitting additional signals after the expected duration. This can be considered as an automatic release of the network resources that were preconfigured for the DL transmission. In some embodiments, the UE may also optionally indicate a desired connected mode discontinuous reception (C-DRX) period or connected mode extended DRX (C-eDRX) period which could be used for the DL transmissions to the UE while the UE is in the connected mode. According to embodiments, a DCI ID (e.g. PC-RNTI) and a DCI channel (e.g. a frequency range and time range or a user specific search space (USS) for the PDCCH) may also be assigned to the UE during this initial configuration period. As previously noted, the UE may indicate that it is not expecting DL data packets after UL data transmission is completed, and this UE may indicate that it is not expecting DL data packets during the configuration of the pre-configured UL resources. For example, the UE may indicate a non-expectation of downlink data packets during transmission of the uplink data to the network node, such as a base station, eNB or gNB.

According to some embodiments, the UL data (msg1) could also include some of this information relating to transition to connected mode e.g. request to go into connect mode. The provision of this information in UL data (msg1) would allow for a more dynamic mechanism, however this configuration can require more signalling overhead as this would need to be included in every UL data (msg 1) versus a one-time initial configuration.

With reference to FIG. 2A, the UE **201**, at **210**, may transmit the uplink data in message 1 (msg1) to the eNB / gNB **202**. Upon receiving the data from the UE, the eNB / gNB **202**, at **220**, transmits DCI including an acknowledgement (ACK) message and the PC-RNTI to the UE **201**. The DCI transmitted at **220**, may be carried on the PDCCH. The transmissions **210** and **220** illustrated in FIG. 2A are associated with a grant free UL data transaction. When the UE **201** receives the ACK message (contained in DCI) from the eNB / gNB **202**, the UE **201**, at **230**, may move directly into the connected mode and wait for the commencement of the DL data transmission.

According to embodiments, at **240**, the eNB / gNB **202** will send a DCI including a DL grant (e.g. which provides scheduling of the physical downlink shared channel (PDSCH)) and PC-RNTI to the UE **201**. The DCI, at **240**, may be carried on the PDCCH. As the UE **201** is already in connected mode, the eNB / gNB **202** can, at **250**, transmit DL data to the UE **201**. When the DL data transmission is completed, the UE **201**, at **260**, can send uplink control information (UCI) which can include hybrid automatic repeat request (HARQ) ACK to the eNB / gNB **202**. The UCI, at **260**, may be carried on the physical uplink control channel (PUCCH). According to embodiments, during steps **230** to **260**, the UE **210** may be in the connected mode, as illustrated in FIG. 2A. Once the eNB / gNB **202** receives the UCI from the UE **201**, the connection between the UE **201** and the eNB / gNB **202** may be released and the UE **201** may transition out of the connected mode.

According to some embodiments, the UE **201** and the eNB / gNB **202** can perform retransmission of data in a case where the previous data transmission failed, an embodiment of which is illustrated in FIG. 2B. Referring to FIG. 2B, the UE **201**, at **211**, can send UL data to the eNB / gNB **202**. If the the transmission to the eNB / gNB **202** is incomplete or corrupted for example, the eNB / gNB **202** can, at **212**, send DCI including a negative acknowledgement (NACK) message and PC-RNTI. The DCI can further include UL grant (e.g. which can define the scheduling of the physical uplink shared channel (PUSCH)) so that the UE **201** can resend the UL data to the eNB / gNB **202**. The DCI, at **212**, may be carried on the PDCCH. Upon receiving the DCI with a NACK and UL GRANT, the UE **201**, at **213**, will retransmit the UL data to the eNB / gNB **202**. If the UL data transmission is successfully completed, then the eNB / gNB **202**, at **214**, will send another DCI including ACK message and PC-RNTI. The DCI, at **214**, may be carried on the PDCCH. The rest of the data transmission steps are similar to the steps as illustrated in FIG. 2A.

As mentioned above, although there may be millions of UEs using the data transmission service that are in idle mode, there is only a limited number of DCI IDs (e.g. only 16-bit RNTI). Thus it is considered that there would not be a sufficient number of PC-RNTIs to uniquely allocate to each of the UEs, should these UEs in idle mode require network resources for transmission or reception. According to embodiments, the assignment method for the PC-RNTI can vary depending on whether the UL resources are shared or dedicated.

According to embodiments, when a UE is allocated to a dedicated UL time / frequency/ signature resource (e.g. UL resource is dedicated to a UE), a PC-RNTI may be assigned to that UE. Then, that PC-RNTI can be re-used for other UEs that are assigned to different DL control channel time / frequency resources. As such the PC-RNTI can be time and frequency division multiplexed on DL control channel resources.

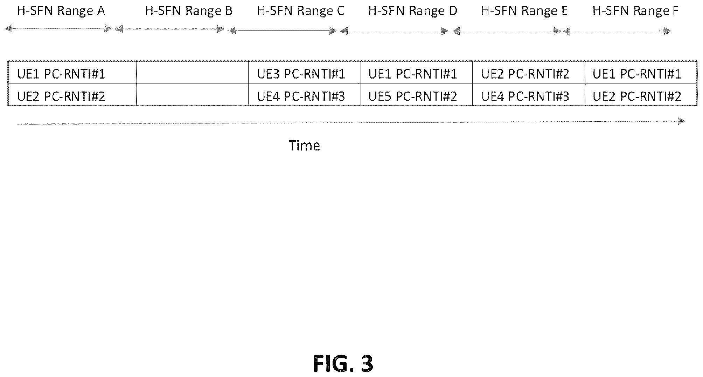

As an example, for time division multiplexing, where the reserved time is based on hyper-system frame number (H-SFN) for time multiplexing, a UE can be assigned a specific PC-RNTI within a specific H-SFN range. Referring to FIG. 3, UE1 can be assigned PC-RNTI #1 and UE2 assigned to PC-RNTI #2 within the H-SFN range A. Within the H-SFN range B, no UE may be assigned. Within the H-SFN range C, UE3 can be assigned PC-RNTI #1 and UE4 can be assigned PC-RNTI #3. Within the H-SFN range D, UE1 can be assigned PC-RNTI #1 and UE5 can be assigned PC-RNTI #2. Within the H-SFN range E, UE2 can be assigned PC-RNTI #2 and UE4 can be assigned PC-RNTI #3. Within the H-SFN range F, UE1 can be assigned PC-RNTI #1 and UE2 can be assigned PC-RNTI #2. According to embodiments, the range allocations can be repeated based on the UE requested time interval of the UL resources. The UE can be able to use the assigned PC-RNTI within the configured H-SFN range, including data retransmissions.

According to embodiments, for dedicated UL / DL resources, there will be no need for collision resolution since the resources are dedicated.

According to embodiments, the number of required unique PC-RNTI's can depend on several factors, for example, the number of supported UEs, the reservation time interval, the number of DCI frequency resources available and the like.

As an example, for a LTE-M network, the number of unique PC-RNTIs required can be calculated based on conditions that can include:

- support for approximately 1 million users sending data once per hour.
- UE supports LTE-M network and has 6 physical resource block (PRB) bandwidth (BW) for DCI reception.
- BW is 10MHz or 25 PRBs.
- number of DL control channels can be equal to 4 non-overlapping control channels (i.e. BW / PBR BW = 25/6 = 4.167 ~ 4) for multiplexing.
- reservation time can be equal to 200ms time duration of the transaction (i.e. time PC-RNTI is reserved). It will be understood that the reservation time needs to be sufficiently long for the completion of the transmission.

According to embodiments, given the above conditions, the number of unique PC-RNTIs required to support UEs will be calculated as:

$$\text{Number of PC-RNTIs required}$$

$$= \frac{(\text{Number of Users to support} \times \text{Reservation Time})}{(\text{Transmission Interval} \times \text{Number of DL control channels})}$$

$$= 10^6 \times 0.2 / (3600 \times 4) = 13.89 \sim 14$$

As such, under the conditions as outlined above, 14 unique PC-RNTIs would be required to support data transmissions from one million UEs where each UE transmits data once per hour. Accordingly, the above method of allocation of PC-RNTIs can support a very large number of UEs with only a few different PC-RNTIs.

However, if the UEs require data transmission in periods which are less than 1 per hour, more PC-RNTIs would need to be allocated. According to embodiments, the PC-RNTI can be extended by using some of the data space inside the DCI. This required data space within the DCI can be called PC-RNTIbis. According to embodiments, this data field within the DCI would not need to be very big to improve scalability (e.g. <6bits) in order that the size of the DCI message is substantially minimally impacted. In these embodiments, the DCI address is then a combination of 16bits (PC-RNTI) + 6bits (PC-RNTIbis) and as such PC-RNTI can thus support 2^24 or 16 million addresses. Accordingly, scalability of the PC-RNTI configuration is possible.

According to embodiments, shared resources are defined as resources where multiple UEs share a pool of UL time / frequency / signature resources. According to embodiments, there are two methods which can be used to assign the PC-RNTI. A first method is to assign a unique PC-RNTI to the UE, referred to as the unique PC-RNTI method, and the second method is to let the UE pick a PC-RNTI from a pool of PC-RNTIs, referred to as the shared PC-RNTI method). It is noted that with shared resources, there is the need to complete contention resolution when two or more UEs pick the same shared resource for use.

According to embodiments, when the unique PC-RNTI method is used, each of the UEs that will use a shared pool of UL time / frequency / signature resources would be assigned a unique PC-RNTI. In this case, the unique PC-RNTI method provides a simple contention resolution process, wherein the UE can determine whether its data transmission or another UE's data transmission has been decoded by the eNB / gNB after collision. In this configuration the DCI ACK contains this unique PC-RNTI for the data transmission with the particular UE whose collided transmission was decoded.

According to embodiments, the PC-RNTIs may be re-used with different resource pools. As a result, only a small number of PC-RNTIs may be needed as long as the resource pool is small and the number of UEs assigned to the resource pool is small. However, the unique PC-RNTI method would require a lot of space for control channel ID in case the number of UEs accessing the resource pool is large.

According to embodiments, when the shared PC-RNTI method is used, the PC-RNTI may be calculated based on a function of the randomly chosen UL time / frequency / signature resources and a configured base PC-RNTI.

According to embodiments, the base PC-RNTI may be assigned at configuration (e.g. RRC configuration) and may be the same for all UEs using the same resource pool. According to embodiments, when there are 10 signatures, 10 frequencies and 10 time slots, an example function to calculate PC-RNTI may be:

$$\begin{aligned} \text{PC-RNTI} = \text{Base PC-RNTI} \\ + 100 \times \text{chosen signature number} \\ + 10 \times \text{chosen frequency} \\ + \text{chosen time slot} \end{aligned}$$

According to embodiments, based on the definition of PC-RNTI as defined in the above equation, there would be a 1:1 mapping of UL resources to PC-RNTI. Thus, the PC-RNTI would only collide if another UE selects the same time / frequency / signature resource. However, when the PC-RNTI collides, the UL data transmission would also collide. According to embodiments, since the PC-RNTI does not help in collision resolution when using the shared PC-RNTI method, an extra step is needed. In some embodiments, the collision can be resolved by sending a DL message from the base station to the UE after the base station sends the DCI containing the ACK message. The DL message may include a large unique ID (e.g. temporary international mobile subscriber identity (T-IMSI) or resume ID).

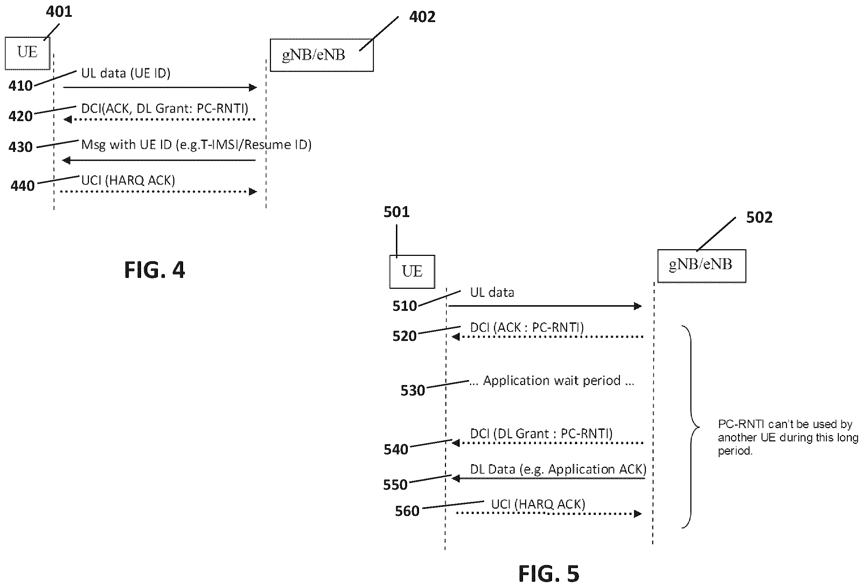

FIG. 4 illustrates an overall flow of the signaling between a UE and a base station for collision resolution for the shared PC-RNTI method according to embodiments. According to embodiments, the UE **401**, at **410**, sends UL data along with its UE ID to the base station **402** (e.g. eNB / gNB **402**). Once the data is received by the eNB / gNB **402**, the eNB / gNB **402**, at **420**, transmits DCI including the ACK message and DL grant along with the PC-RNTI to the UE **401**. The DCI, at **420**, can be carried on the PDCCH. After the DCI is sent to the UE **401**, the eNB / gNB **402**, at **430**, will send another message with the UE ID of the UE **401** for collision resolution should there be a data transmission collision. When the UE **401** receives the DCI and the extra message containing the UE ID (e.g. T-IMSI or resume ID) from the eNB / gNB **402**, the UE **401**, at **440**, sends UCI including HARQ ACK to the eNB / gNB **402**. The UCI, at **440**, may be carried on the PUCCH.

According to some embodiments, there is provided PC-RNTI reconfiguration. According to these embodiments, the PC-RNTI reconfiguration is used to resolve collision between multiple UEs where those UEs select the same PC-RNTI for data transmission.

According to embodiments, when there are many UL data re-transmissions and/or when there are DL data transmissions or UL data to send between a UE and a base station (e.g. gNB or eNB), the UE will be in connected mode for a time period longer than the "reservation time" of the PC-RNTI. Due to the extended transmission time, if another UE selects or has previously selected the same PC-RNTI, collision between the two UEs may occur should the two UEs need the same PC-RNTI at the same time. FIG. 5 illustrates an example where a collision of data transmission of two UEs is more likely occur due to the unavailability of the PC-RNTI for a longer period of time. The procedure illustrated in FIG. 5 is illustrative of an example of grant free (GF) UL and DL data transmissions.

Referring to FIG. 5, the UE **501**, at **510**, transmits the UL data to the eNB / gNB **502**. Upon receiving the data from the UE, the eNB / gNB **502**, at **520**, transmits DCI including the ACK message and the PC-RNTI to the UE **501**. The DCI, at **520**, can be carried on the PDCCH. After the UE **501** receives the ACK message (contained in DCI) from the eNB / gNB **502**, there may be, at **530**, an application wait period. Then, the UE **501**, at **540**, will receive a DCI including DL Grant and PC-RNTI from the eNB / gNB **502**. The DCI, at **540**, may be carried on the PDCCH. The eNB / gNB **502** will, at **550**, transmit DL data, for example including an application ACK message, to the UE **501**. When the DL data transmission is completed, the UE **501**, at **560**, sends UCI comprising HARQ ACK to the eNB / gNB **502**. The UCI, at **560**, can be carried on the PUCCH. During the long time period from step **520** (i.e. when the eNB / gNB **502** sends the DCI to the UE **501**) to step **560** (i.e. when the UE **501** sends the UCI to the eNB / gNB **502**), the PC-RNTI selected by the UE **501** it is desired that the PC-RNTI is not used by other UEs, to avoid data transmission collision.

Thus, when the usage of the DCI ID (e.g. PC-RNTI) is longer than the reservation time for the DCI ID (e.g. PC-RNTI), the base station (e.g. eNB / gNB **502** in FIG. 5) may want to change the DCI ID (e.g. PC-RNTI) to another ID dynamically in order to mitigate such data transmission collision potential. According to embodiments, the change of the DCI ID (e.g. PC-RNTI) can be similar to the promotion of temporary C-RNTI to C-RNTI during msg4 of the legacy random access (RA) procedure.

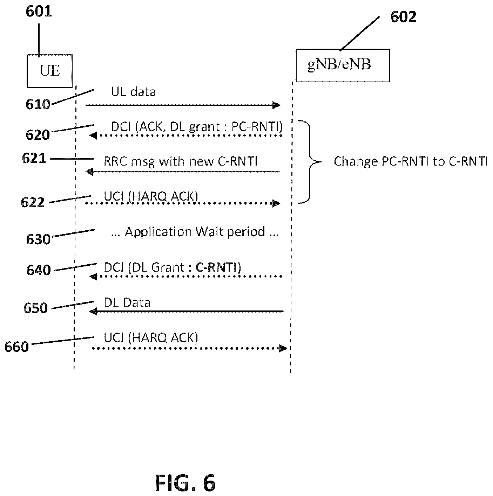

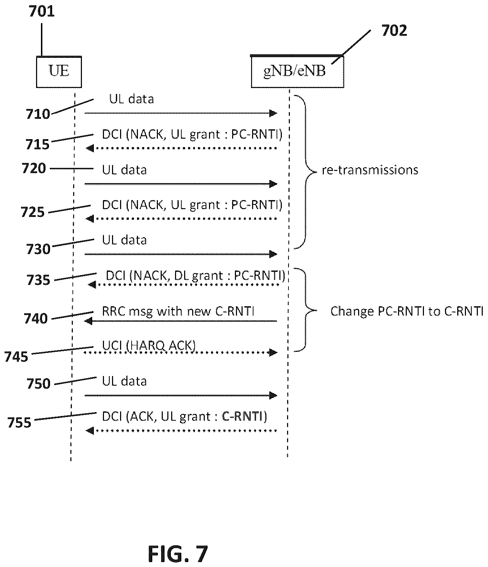

FIGs. 6 and FIG. 7 illustrate overall flows of the signaling between a UE and a base station for changing PC-RNTI to C-RNTI, in accordance with various embodiments of the present invention. The transmissions illustrated in FIGs. 6 and 7 are similar to the data transmission procedures illustrated in FIG. 5 with the inclusion of the steps for changing the PC-RNTI to C-RNTI.

FIG. 6 illustrates signaling between the UE and a base station for the change of the PC-RNTI to C-RNTI after the UL data is sent. Referring to FIG. 6, the UE **601**, at **610**, transmits the UL data to the eNB / gNB **602**. Upon receiving the data from the UE, the eNB / gNB **602**, at **620**, transmits DCI including the ACK message and DL grant along with the PC-RNTI to the UE **601**. The DCI, at **620**, may be carried on the PDCCH. After the eNB / gNB **602** sends the ACK message (contained in DCI) to the UE **601**, the eNB / gNB **602**, at **621**, transmits RRC message with a new C-RNTI to the UE **601**. Once the UE **601** receives the new C-RNTI, the UE **601**, at **622**, sends a HARQ ACK message to the eNB / gNB **602** for acknowledgement of receipt of the message. Throughout the steps from **620** to **622**, the old identifier to identify a UE in connected mode in the network (i.e. PC-RNTI) is now changed to new identifier (i.e. C-RNTI) and the new identifier will be used for communication between the UE **601** and the eNB / gNB **602**. Once the ID is successfully changed, there will be, at **630**, an application wait period. Then, the eNB / gNB **602**, at **640**, sends a DCI including DL grant and the new identifier (i.e. C-RNTI) to the UE **601**. The DCI, at **640**, may be carried on the PDCCH. Subsequently, the eNB / gNB **602**, at **650**, transmits DL data to the UE **601**. When the DL data transmission is completed, the UE **601**, at **660**, sends UCI including a HARQ ACK to the eNB / gNB **602**. The UCI, at **660**, may be carried on the PUCCH.

FIG. 7 illustrates signaling between the UE and a base station for change of the PC-RNTI to a C-RNTI when there are re-transmissions due to transmission errors which occurred during the data transmissions. Referring to FIG. 7, the UE **701,** at **710,** transmits the UL data to the eNB / gNB **702.** Due to one or more data transmission errors, for example collisions, the eNB / gNB **702,** at **715,** transmits DCI including a NACK message and UL grant along with the PC-RNTI to the UE **701.** The DCI, at **715,** may be carried on the PDCCH. Upon receiving the NACK message, the UE **701,** at **720,** attempts retransmission of the UL data to the eNB / gNB **702.** Assuming further errors occurred again during the UL data retransmission, the eNB / gNB **702,** at **725,** transmits DCI including a NACK message and UL grant along with the PC-RNTI to the UE **701.** The DCI, at **725,** may be carried on the PDCCH. Upon receiving the NACK message, the UE **701,** at **730,** will again retransmit the UL data to the eNB / gNB 702. If further errors occur during the UL data transmission, the eNB / gNB **702,** at **735,** will send another DCI including a NACK message.

According to embodiments, since there have been multiple errors during UL data transmission, the eNB / gNB **702** may assume the data transmission failure is caused by collision due to use of the same PC-RNTI by another UE. Since the PC-RNTI is not available, a new ID will be needed for data transmission between the UE **701** and the eNB / gNB **702.** Subsequently the eNB / gNB **702** prepares the DCI including the NACK message and DL grant along with the PC-RNTI. Here, the DCI prepared by the eNB / gNB **702** is different from the two previous DCIs (i.e. DCIs transmitted at **715** and **725)** as that the DCI transmitted at **735,** includes a DL grant. This DL grant is provided as the subsequent data transmission will be DL data transmission from the eNB / gNB **702** to the UE **701.** According to embodiments, the DCI, at **735,** may be carried on the PDCCH.

After the eNB / gNB **702,** at **735,** transmits the DCI to the UE **701,** the eNB / gNB **702,** at **740,** transmits a RRC message with a C-RNTI to the UE **701.** Once the UE **701** receives the C-RNTI, which defines a new identifier to be associated with the UE, the UE **701,** at **745,** sends an UCI including a HARQ ACK message to the eNB / gNB **702** for acknowledgement of the receipt of the message. The UCI, at **745,** may be carried on the PUCCH. Throughout the steps from **735** to **745,** the old identifier to identify a UE in connected mode within the network (i.e. PC-RNTI) is now changed to new identifier (i.e. C-RNTI) and the new identifier will be used for subsequent transmission between the UE **701** and the eNB / gNB **702.** After the UE **701** sends the HARQ ACK message to the eNB / gNB **702,** the UE transmits at **750** UL data to the eNB / gNB **702.** Upon receiving the data from the UE, the eNB / gNB **702,** at **755** transmits a DCI including an ACK message and UL grant along with the C-RNTI to the UE **701.** After the step **755** normal data transmissions can occur between the UE **701** and the eNB / gNB **702** using C-RNTI to identify the UE **701** that is in connected mode.

As discussed earlier, if a UE is assigned a dedicated preconfigured UL resource (PUR) but has no data to send, an issue arises if the UE can optionally send data or not send data. In such a case, the base station (e.g. eNB or gNB or the like) needs a reliable mechanism to distinguish the difference between data transmission and no data transmission, for example, given that noise can be an issue during the transmissions and cause ambiguity regarding the determination of the difference between data transmission and no data transmission.

According to some embodiments, the UE is configured either to send data when data transmission is required and to send a short sequence or signal as in indicator when data transmission is not required. In some embodiments, the short sequence or signal can be a sounding reference signal (SRS) which is typically 1 symbol. In other embodiments the short sequence or signal can be a demodulation reference signal (DMRS) with is typically 2 symbols per subframe. By the UE transmitting a short sequence or signal when no data is to be transmitted, the base station or network node can perform a correlation on the received signal to determine if the UE has sent UL data or if the signal is merely indicating that no data has been transmitted. This correlation of the received signal can enable the base station to determine what was sent by the UE in the presence of signal noise. In addition, as the short sequence or signal which is transmitted when no data is to be transmitted, is relatively small, there is a substantially minimal power consumption by the UE for the sending of the short sequence or signal as in indicator when data transmission is not required.

It is understood that it is desirous that a UE avoids being powered on even for a limited period of time in order to conserve as much power as possible. As such, according to some embodiments, the UE can indicate to the base station (i.e. eNB, gNB or other base station or network node configuration) that a response to a transmission from the UE is not expected by the UE. This indication can be provided by the UE at the initiation of communication with the base station. For example, the indication that the UE does not require a response can be provided in msg1 (PRACH) or in msg3 which are transmitted by the UE at initiation of communication. In these embodiments, as the UE does not expect a response from the base station, the UE may substantially immediately power down after the UL transmission has been completed thereby. However, as would be readily understood the UE may only power down upon receipt of an acknowledgement from the network node, for example a base station, eNB or gNB. In addition, as the UE has provided the indication that it does not need a response to the UL transmission, the base station would readily know that there are no further transmission to be received from the UE during this particular session, as upon completion of the UL transmission the UE will power down.

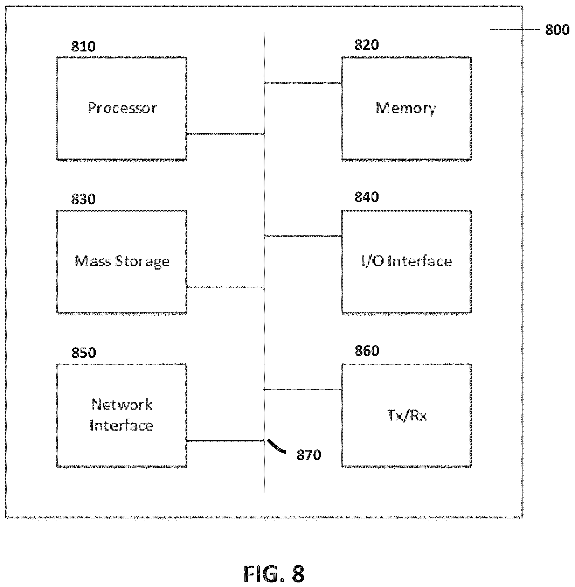

FIG. 8 is a schematic diagram of an electronic device **800** that may perform any or all of the steps of the above methods and features described herein, according to different embodiments of the present invention. For example, a UE may be configured as an electronic device **800.** Further, a network node for reconfiguring a PC-RNTI may be configured as an electronic device **800.**

As shown, the device includes a processor **810,** memory **820,** non-transitory mass storage **830,** I/O interface **840,** network interface **850,** and a transceiver **860,** all of which are communicatively coupled via bi-directional bus **870.** According to certain embodiments, any or all of the depicted elements may be utilized, or only a subset of the elements. Further, the device **800** may contain multiple instances of certain elements, such as multiple processors, memories, or transceivers. Also, elements of the hardware device may be directly coupled to other elements without the bi-directional bus.

The memory **820** may include any type of non-transitory memory such as static random access memory (SRAM), dynamic random access memory (DRAM), synchronous DRAM (SDRAM), read-only memory (ROM), any combination of such, or the like. The mass storage element **830** may include any type of non-transitory storage device, such as a solid state drive, hard disk drive, a magnetic disk drive, an optical disk drive, USB drive, or any computer program product configured to store data and machine executable program code. According to certain embodiments, the memory **820** or mass storage **830** may have recorded thereon statements and instructions executable by the processor **810** for performing any of the aforementioned method steps described above.

As will be readily understood by the description above, the terms base station and network node can be interchangeable used to define an evolved NodeB (eNB), a next generation NodeB (gNB) or other base station or network node configuration.

It will be appreciated that, although specific embodiments of the technology have been described herein for purposes of illustration, various modifications may be made without departing from the scope of the technology. The specification and drawings are, accordingly, to be regarded simply as an illustration of the invention as defined by the appended claims, and are contemplated to cover any and all modifications, variations, combinations or equivalents that fall within the scope of the present invention. In particular, it is within the scope of the technology to provide a computer program product or program element, or a program storage or memory device such as a magnetic or optical wire, tape or disc, or the like, for storing signals readable by a machine, for controlling the operation of a computer according to the method of the technology and/or to structure some or all of its components in accordance with the system of the technology.

Acts associated with the method described herein can be implemented as coded instructions in a computer program product. In other words, the computer program product is a computer-readable medium upon which software code is recorded to execute the method when the computer program product is loaded into memory and executed on the microprocessor of the wireless communication device.

Acts associated with the method described herein can be implemented as coded instructions in plural computer program products. For example, a first portion of the method may be performed using one computing device, and a second portion of the method may be performed using another computing device, server, or the like. In this case, each computer program product is a computer-readable medium upon which software code is recorded to execute appropriate portions of the method when a computer program product is loaded into memory and executed on the microprocessor of a computing device.

Further, each step of the method may be executed on any computing device, such as a personal computer, server, PDA, or the like and pursuant to one or more, or a part of one or more, program elements, modules or objects generated from any programming language, such as C++, Java, or the like. In addition, each step, or a file or object or the like implementing each said step, may be executed by special purpose hardware or a circuit module designed for that purpose.

It is obvious that the foregoing embodiments of the invention are examples and can be varied in many ways.

**Claims**

1. A method for small data transmission between a user equipment, UE, (201) and a network node, comprising:

transmitting (210), by the UE, uplink data in a preconfigured uplink resource, PUR, to the network node, the UE indicating an expectation of downlink data on a physical downlink shared channel during configuration of the PUR; and
receiving (220), by the UE, first downlink control information, DCI, wherein the first DCI includes an acknowledgement or negative acknowledgement of the uplink data transmission and a DCI identifier, ID;
receiving (240), by the UE, a second DCI wherein the second DCI includes a downlink grant and the DCI ID; and
receiving (250), by the UE, downlink data.

2. The method according to claim 1, wherein the DCI ID is a preconfigured radio network temporary identifier, PC-RNTI.

3. The method according to claim 1, wherein the uplink data transmission is grant free.

4. The method according to claim 1, further comprising:

upon receipt of the acknowledgement, changing, by the UE, to connected mode.

5. The method according to claim 2, wherein the PC-RNTI is assigned to the UE for one or more of dedicated time, frequency and signature resource.

6. A user equipment, UE, (201) for small data transmission, the UE comprising:

a network interface (850) for receiving and transmitting data;
a processor (810); and
a non-transient memory (820) for storing instructions that when executed by the processor cause the UE to:

transmit (220) uplink data in a preconfigured uplink resource, PUR, to the network node, the UE indicating an expectation of downlink data on a physical downlink shared channel during configuration of the PUR;
receive (220) first downlink control information, DCI, wherein the first DCI includes an acknowledgement or negative acknowledgement of the uplink data transmission and an DCI identifier, ID;
receive (240) a second DCI wherein the second DCI includes a downlink grant and the DCI ID; and
receive (250) the downlink data.

7. The UE according to claim 6, wherein the DCI ID is a preconfigured radio network temporary identifier, PC-RNTI and the UE shares the PC-RNTI with other UEs.

8. A network node (202) for small data transmission, the network node comprising:

a network interface (850) for receiving and transmitting data;
a processor (810); and
a non-transient memory (820) for storing instructions that when executed by the processor cause the network node to:

receive from a user equipment, UE, an expectation of downlink data during configuration of a preconfigured uplink resource, PUR;
receive (210) uplink data from the UE in the PUR;
transmit (220) first downlink control information, DCI, wherein the first DCI includes an acknowledgement or negative acknowledgement of the uplink data transmission and a DCI identifier, ID;
transmit (240) a second DCI wherein the second DCI includes a downlink grant and the DCI ID; and
transmit (250) the downlink data.

9. The network node according to claim 8, wherein the DCI ID is a preconfigured radio network temporary identifier, PC-RNTI.

10. The network node according to claim 8, wherein the uplink data transmission is grant free.


**Patentansprüche**

1. Verfahren zur kleinen Datenübertragung zwischen einem Benutzergerät, UE, (201) und einem Netzknoten, umfassend:

Übertragen (210) von Uplink-Daten in einer vorkonfigurierten Uplink-Ressource, PUR, durch das UE an den Netzknoten, wobei das UE eine Erwartung von Downlink-Daten auf einem physikalischen gemeinsam genutzten Downlink-Kanal während der Konfiguration der PUR angibt; und
Empfangen (220) einer ersten Downlink-Steuerinformation, DCI, durch das UE, wobei die erste DCI eine Bestätigung oder eine negative Bestätigung der Uplink-Datenübertragung und eine DCI-Kennung, ID, enthält;
Empfangen (240) einer zweiten DCI durch das UE, wobei die zweite DCI eine Downlink-Erlaubnis und die DCI ID enthält; und
Empfang (250) von Downlink-Daten durch das UE.

2. Verfahren nach Anspruch 1, wobei die DCI ID eine vorkonfigurierte temporäre Funknetzkennung (PC-RNTI) ist.

**3.** Verfahren nach Anspruch 1, wobei die Uplink-Datenübertragung erlaubnisfrei ist.

**4.** Verfahren nach Anspruch 1, das ferner umfasst: bei Empfang der Bestätigung Wechsel in den Verbindungsmodus durch das UE.

**5.** Verfahren nach Anspruch 2, wobei die PC-RNTI dem UE für eine oder mehrere ausgewählt aus dedizierte Zeit-, Frequenz- und Signaturressourcen zugewiesen wird.

**6.** Benutzergerät, UE, (201) für kleine Datenübertragung, wobei das UE umfasst:

> eine Netzwerkschnittstelle (850) zum Empfangen und Senden von Daten;
> einen Prozessor (810); und
> einen nicht flüchtigen Speicher (820) zum Speichern von Befehlen, die, wenn sie von dem Prozessor ausgeführt werden, das UE veranlassen:
> Uplink-Daten in einer vorkonfigurierten Uplink-Ressource, PUR, an den Netzknoten zu übertragen (220), wobei das UE während der Konfiguration der PUR eine Erwartung von Downlink-Daten auf einem physikalischen gemeinsam genutzten Downlink-Kanal angibt;
> eine erste Downlink-Steuerinformation zu empfangen (220), DCI, wobei die erste DCI eine Bestätigung oder negative Bestätigung der Uplink-Datenübertragung und eine DCI-Kennung, ID, enthält;
> eine zweite DCI zu empfangen (240), wobei die zweite DCI eine Abwärtsstreckenerlaubnis und die DCI-ID enthält; und
> die Downlink-Daten zu empfangen (250).

**7.** UE nach Anspruch 6, wobei die DCI ID eine vorkonfigurierte temporäre Funknetzkennung, PC-RNTI, ist und das UE die PC-RNTI mit anderen UEs teilt.

**8.** Netzwerkknoten (202) für die Übertragung kleiner Daten, wobei der Netzwerkknoten Folgendes umfasst: Eine Netzwerkschnittstelle (850) zum Empfangen und Übertragen von Daten;

> einen Prozessor (810); und
> einen nicht flüchtigen Speicher (820) zum Speichern von Befehlen, die, wenn sie vom Prozessor ausgeführt werden, den Netzwerkknoten veranlassen:

> > von einem Benutzergerät, UE, während der Konfiguration einer vorkonfigurierten Uplink-Ressource, PUR, eine Erwartung von Downlink-Daten zu empfangen;
> > Uplink-Daten vom UE im PUR zu empfangen (210);
> > eine erste Downlink-Steuerinformation zu übertragen (220), DCI, wobei die erste DCI eine Bestätigung oder negative Bestätigung der Uplink-Datenübertragung und eine DCI-Kennung, ID, enthält;
> > eine zweite DCI zu senden (240), wobei die zweite DCI eine Abwärtsstreckenerlaubnis und die DCI-ID enthält; und
> > die Downlink-Daten zu übertragen (250).

**9.** Netzknoten nach Anspruch 8, wobei die DCI ID eine vorkonfigurierte temporäre Funknetzkennung (PC-RNTI) ist.

**10.** Netzknoten nach Anspruch 8, wobei die Uplink-Datenübertragung erlaubnisfrei erfolgt.

**Revendications**

**1.** Procédé pour la transmission de petites données entre un équipement utilisateur, UE, (201) et un noeud de réseau, comprenant:

> la transmission (210), par l'UE, de données de liaison montante dans une ressource de liaison montante préconfigurée, PUR, au noeud de réseau, l'UE indiquant une prévision de données de liaison descendante sur un canal partagé de liaison descendante physique pendant la configuration de la PUR; et
> la réception (220), par l'UE, de premières informations de contrôle de liaison descendante, DCI, dans lequel les premières DCI incluent une confirmation ou une confirmation négative de la transmission de données de liaison montante et un identifiant de DCI, ID;

la réception (240), par l'UE, de secondes DCI, dans lequel les secondes DCI incluent une autorisation de liaison descendante et l'ID de DCI; et

la réception (250), par l'UE, de données de liaison descendante.

2. Procédé selon la revendication 1, dans lequel l'ID de DCI est un identifiant temporaire de réseau radio préconfiguré, PC-RNTI.

3. Procédé selon la revendication 1, dans lequel la transmission de données de liaison montante est sans autorisation.

4. Procédé selon la revendication 1, comprenant en outre:
à la réception de l'accusé de réception, le passage, par l'UE, en mode connecté.

5. Procédé selon la revendication 2, dans lequel le PC-RNTI est attribué à l'UE pour une ou plusieurs de ressources de temps, de fréquence et de signature dédiées.

6. Équipement utilisateur, UE, (201) pour la transmission de petites données, l'UE comprenant:

une interface réseau (850) pour recevoir et transmettre des données;
un processeur (810); et
une mémoire non transitoire (820) pour stocker des instructions qui, lorsqu'elles sont exécutées par le processeur, amènent l'UE à:

transmettre (220) des données de liaison montante dans une ressource de liaison montante préconfigurée, PUR, au noeud de réseau, l'UE indiquant une prévision de données de liaison descendante sur un canal partagé de liaison descendante physique pendant la configuration de la PUR;
recevoir (220) des premières informations de contrôle de liaison descendante, DCI, dans lequel les premières DCI incluent une confirmation ou une confirmation négative de la transmission de données de liaison montante et un identifiant de DCI, ID;
recevoir (240) des secondes DCI dans lequel les secondes DCI incluent une autorisation de liaison descendante et l'ID de DCI; et
recevoir (250) les données de liaison descendante.

7. UE selon la revendication 6, dans lequel l'ID de DCI est un identifiant temporaire de réseau radio préconfiguré, PC-RNTI et l'UE partage le PC-RNTI avec d'autres UE.

8. Noeud de réseau (202) pour la transmission de petites données, le noeud de réseau comprenant:

une interface réseau (850) pour recevoir et transmettre des données;
un processeur (810); et
une mémoire non transitoire (820) pour stocker des instructions qui, lorsqu'elles sont exécutées par le processeur, amènent le noeud de réseau à:

recevoir d'un équipement utilisateur, UE, une prévision de données de liaison descendante pendant la configuration d'une ressource de liaison montante préconfigurée, PUR;
recevoir (210) des données de liaison montante de l'UE dans la PUR;
transmettre (220) des premières informations de contrôle de liaison descendante, DCI, dans lequel les premières DCI incluent une confirmation ou une confirmation négative de la transmission de données de liaison montante et un identifiant de DCI, ID;
transmettre (240) des secondes DCI, dans lequel les secondes DCI incluent une autorisation de liaison descendante et l'ID de DCI; et
transmettre (250) les données de liaison descendante.

9. Noeud de réseau selon la revendication 8, dans lequel l'ID de DCI est un identifiant temporaire de réseau radio préconfiguré, PC-RNTI.

10. Noeud de réseau selon la revendication 8, dans lequel la transmission de données de liaison montante est sans autorisation.

FIG. 1
(PRIOR ART)

**FIG. 2A**

**FIG. 2B**

EP 3 847 846 B1

| H-SFN Range A | H-SFN Range B | H-SFN Range C | H-SFN Range D | H-SFN Range E | H-SFN Range F |
|---|---|---|---|---|---|
| UE1 PC-RNTI#1 | | UE3 PC-RNTI#1 | UE1 PC-RNTI#1 | UE2 PC-RNTI#2 | UE1 PC-RNTI#1 |
| UE2 PC-RNTI#2 | | UE4 PC-RNTI#3 | UE5 PC-RNTI#2 | UE4 PC-RNTI#3 | UE2 PC-RNTI#2 |

Time

**FIG. 3**

**FIG. 4**

401 UE
402 gNB/eNB

410 UL data (UE ID)
420 DCI(ACK, DL Grant: PC-RNTI)
430 Msg with UE ID (e.g.T-IMSI/Resume ID)
440 UCI (HARQ ACK)

**FIG. 5**

501 UE
502 gNB/eNB

510 UL data
520 DCI (ACK : PC-RNTI)
530 ... Application wait period ...
540 DCI (DL Grant : PC-RNTI)
550 DL Data (e.g. Application ACK)
560 UCI (HARQ ACK)

PC-RNTI can't be used by another UE during this long period.

**601**

UE

**602**

gNB/eNB

**610** — UL data →

**620** — DCI (ACK, DL grant : PC-RNTI) ←

**621** — RRC msg with new C-RNTI ←

Change PC-RNTI to C-RNTI

**622** — UCI (HARQ ACK) →

**630** — ... Application Wait period ...

**640** — DCI (DL Grant : C-RNTI) ←

**650** — DL Data ←

**660** — UCI (HARQ ACK) →

**FIG. 6**

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018123765 A, Cao

**Non-patent literature cited in the description**

- **NOKIA et al.** Transmission in preconfigured UL resources. *3GPP Draft; R1-1808431_Trans_in_Preconfig_UL_Resources, 3rd Generation Partnership Project (3GPP), Mobile Competence Centre; 650, Route des Lucioles; F-06921 Sophia-Antipolis Ce-dex; France*